# EUROPÄISCHE PATENTANMELDUNG

(11) **EP 1 473 191 A2**
(43) Veröffentlichungstag der Anmeldung: **03.11.2004**
(21) Anmeldenummer: 04009637.2
(22) Anmeldetag: 23.04.2004
(51) Int. Cl.: B60Q 1/42

(54) **Rückstelleinrichtung für ein Blinkerschalthebel eines Fahrzeuges**

(30) Priorität: 28.04.2003 DE 10320514
(71) Anmelder: Valeo Schalter und Sensoren GmbH, 74321 Bietigheim-Bissingen (DE)
(72) Erfinder: Papenfuss, Jürgen, 74343 Sachsenheim (DE); Machalitzky, Otto, 74321 Bietigheim-Bissingen (DE); Herda, Hans-Georg, 74348 Lauffen (DE)
(74) Vertreter: Bulling, Alexander, Dr.

(57) **Zusammenfassung**

Die Erfindung betrifft eine Rückstelleinrichtung (10) zur Rückstellung eines Blinkerschalthebels eines Lenkstockschalters von einer Schaltstellung in eine Ausgangstellung, mit einem schalthebelseitigen, um eine Schwenkachse (44) verschwenkbaren Halteabschnitte (38,40) aufweisenden Mitnehmer (42) mit Kipphebeln (26,28), die um ihre jeweilige Kipphebelachse (30,32) verschwenkbar sind und je eine mit einem Mitnehmer (42) zusammenwirkende Anlagekontur (46) aufweisen, wobei jede Anlagekontur eine Rückhalteausbuchtung (52) für den ihr zugewandten Halteabschnitte (38,40) aufweist, und mit einem um eine Auslöseachse (20) auslenkbaren Auslösefinger (18), wobei der Auslösefinger (18) von einem lenkradseitigen Nocken (14) betätigbar ist und zur Rückstellung des Schalthebels den jeweiligen Kipphebel (26,28) soweit auslenkt, dass der in der Rückhalteausbuchtung (52) liegende Halteabschnitt (38,40) freigegeben wird. Die Erfindung kennzeichnet sich, dass die Kipphebelachsen (30,32) auf der dem Lenkstock (16) abgewandten Seite der Auslöseachse (20) angeordnet sind und dass der zwischen der Auslöseachse (20) und dem mit dem Nocken (14) zusammenwirkenden Kontaktabschnitt (24) des Auslösefingers (18) liegende Bereich den jeweiligen Kipphebel (26,28) zur Auslenkung beaufschlagt.

## Beschreibung

Die Erfindung betrifft eine Rückstelleinrichtung zur Rückstellung eines Blinkerschalthebels eines Lenkstockschalters von einer Schaltstellung in eine Ausgangstellung, mit einem schalthebelseitigen, um eine Schwenkachse verschwenkbaren Halteabschnitte aufweisenden Mitnehmer, mit Kipphebeln, die um ihre jeweilige Kipphebelachse verschwenkbar sind und je eine mit einem Halteabschnitte zusammenwirkende Anlagekontur aufweisen, wobei jede Anlagekontur eine Rückhalteausbuchtung für den ihr zugewandten Halteabschnitte aufweist, und mit einem um eine Auslöseachse auslenkbaren Auslösefinger, wobei der Auslösefinger von einem lenkradseitigen Nocken betätigbar ist und zur Rückstellung des Schalthebels den jeweiligen Kipphebel soweit auslenkt, dass der in der Rückhalteausbuchtung liegende Halteabschnitt freigegeben wird. Beim Freigeben der Halteabschnitte wird der Mitnehmer, und folglich der Blinkerschalthebel, in seine Ausgangsstellung rückgestellt.

Aus der DE 100 37 586 A1 ist eine Rückstelleinrichtung bekannt geworden, bei der die Bewegung des Auslösefingers auf Sperrtüren übertragen wird. Die Sperrtüren sind über eine recht aufwändige Mechanik mit dem Auslösefinger bewegungsgekoppelt. Ein Auslenken des Auslösefingers führt zu einem Aufschwenken der Sperrtüren, wodurch die Halteabschnitte freigegeben werden und ein Rückstellen des Blinkschalthebels erfolgt.

Aus der DE 25 53 009 U ist eine gattungsgemäße Rückstelleinrichtung bekannt geworden, die vergleichsweise viel Bauraum beansprucht. Gerade im Bereich der Lenkstockschalter sind bei modernen Kraftfahrzeugen eine Vielzahl von Schalteinheiten und Sensoren vorhanden, so dass sehr beengte Platzverhältnisse vorherrschen.

Der vorliegenden Erfindung liegt deshalb die Aufgabe zugrunde, eine Rückstelleinrichtung mit den eingangs genannten Merkmalen dahingehend weiterzubilden, dass sie zum einen sehr kompakt baut und zum anderen dauerhaft funktionssicher arbeitet.

Diese Aufgabe wird durch eine eingangs genannte Rückstelleinrichtung dadurch gelöst, dass die Kipphebelachsen auf der dem Lenkstock abgewandten Seite der Auslöseachse angeordnet sind und dass der zwischen der Auslöseachse und dem mit dem Nocken zusammenwirkenden Kontaktabschnitt liegende Bereich des Auslösefingers den Kipphebel zur Auslenkung wenigstens abschnittsweise beaufschlagt. Die Kipphebelachsen sind folglich in radialer Richtung gesehen weiter von der Lenkstockachse entfernt als die Auslöseachse des Auslösefingers. Durch die beschriebenen geometrischen Verhältnisse ergibt sich eine in von der Lenkstockachse radialer Richtung gesehene sehr kompakt bauende Rückstelleinrichtung.

Eine vorteilhafte Ausführungsform der Erfindung zeichnet sich dadurch aus, dass die Kipphebelachsen auf der dem Auslösefinger abgewandten Seite des jeweiligen Kipphebels liegen. Hierdurch wird insbesondere erreicht, dass in dem dem Auslösefinger fern gelegenen Bereich lediglich eine sehr geringe Auslenkung des jeweiligen Kipphebels erfolgt und vergleichsweise wenig Bauraum bereitzustellen ist. Die Kipphebel erfahren insbesondere in dem Bereich, in dem die Auslenkung des Auslösefingers erfolgt, ihre Hauptauslenkung.

Ferner trägt zu einer kompakten Bauweise der Rückstelleinrichtung bei, wenn die Anlagekonturen der Kipphebel entsprechend den Bewegungsbahnen der Halteabschnitte kreisbogenförmig um die Schwenkachse des Mitnehmers ausgebildet sind, wobei der Auslösefinger zwischen den einander zugewandten, der Lenkstockachse nahe gelegenen, Seiten der Kipphebel angeordnet ist. Die Kipphebel erfahren vorteilhafterweise nur dann eine Auslenkung, wenn die Halteabschnitte in einen der Rückhalteausbuchtung nahe gelegenen Bereich gelangen. Dabei ist vorteilhaft, wenn die Rückhalteausbuchtungen durch je einen sich an die Rückhalteausbuchtung anschließende, sich nach radial innen erstreckende Rückhalteerhebung gebildet werden. Die Rückhalteerhebung ist dabei vorteilhafterweise so ausgebildet, dass sie tangential in den dem Auslösefinger zugewandten, kreisbogenförmigen Bereich der Anlagekontur übergeht. Vorteilhafterweise liegt der Grund der Rückhalteausbuchtung auf dem verlängerten Kreisbogen der Anlagekontur. Dadurch ergibt sich ein gleichmäßiges und angenehmes Schaltgefühl beim Schalten des Blinkerschalthebels.

Zum Rückstellen des Schalthebels in seine Ausgangsstellung erfolgt eine Auslenkung des jeweiligen Kipphebels durch den Auslösefinger, der seinerseits durch einen lenkradseitigen Nocken betätigt wird. Beim Betätigen des Schalthebels von seiner Ausgangsstellung in die Schaltstellung kann ebenfalls ein Auslenken des jeweiligen Kipphebels erfolgen. Der Kipphebel wird dadurch ausgelenkt, dass der entsprechende Halteabschnitt die Rückhalteerhebung beim Schalten überfährt, bevor der Halteabschnitt in die zugehörige Rückhalteausbuchtung gelangt.

Eine weitere vorteilhafte Ausgestaltung der Erfindung kennzeichnet sich dadurch, dass in der Ausgangsstellung die dem Auslösefinger zugewandten Seiten der Kipphebel minimal vom Auslösefinger beabstandet sind oder gegen den Auslösefinger wirken. Dadurch wird erreicht, dass schon bei einer sehr geringen Auslenkung des Auslösefingers der jeweilige Kipphebel durch den Auslösefinger betätigt wird. Vorteilhafterweise können die Kipphebel so angeordnet sein, dass sie den Auslösefinger unter einer geringen Vorspannung beaufschlagen. Hierdurch werden Toleranzen ausgeglichen, wodurch Klappergeräusche unterbunden werden.

Vorteilhafterweise ist erfindungsgemäß ferner vorgesehen, dass der Auslösefinger unmittelbar mit den Kipphebeln und die Kipphebel unmittelbar mit dem jeweiligen Halteabschnitt zusammenwirken. Hierdurch ergibt sich eine sehr einfache, störunanfällige und funktionssichere Mechanik.

Um ein unerwünschtes Auslenken der Kipphebel zu unterbinden, kann erfindungsgemäß vorgesehen sein, dass Anschlagmittel vorgesehen sind, die die Auslenkung der Kipphebel begrenzen. Derartige Anschlagmittel können beispielsweise eine Anschlagaussparung in den Kipphebeln und je einen ortsfest angeordneten Anschlagzapfen umfassen, der in die jeweilige Anschlagaussparung eingreift. In der einen Endposition des jeweiligen Kipphebels schlägt der Anschlagzapfen gegen die eine Innenseite der Anschlagaussparung, in der anderen Endposition gegen die andere.
Eine weitere erfindungsgemäße Ausführungsform sieht vor, dass Rückstellmittel vorhanden sind, die den Mitnehmer und den Schalthebel beim Auslösen des entsprechenden Halteabschnitts aus der Rückhalteausbuchtung in die Ausgangsstellung rückstellen. Als Rückstellmittel kommen insbesondere Rückstellfederelemente in Betracht, die in der Schaltstellung vorgespannt sind und beim Auslösen ein Schwenken des Mitnehmers beziehungsweise des Schalthebels in die Ausgangsstellung bewirken.

Eine weitere vorteilhafte Ausführungsform der Erfindung zeichnet sich dadurch aus, dass die Kipphebel durch Federelemente federbeaufschlagt in einer nicht ausgelenkten Grundstellung gehalten werden. Die Auslenkung der Kipphebel erfolgt dabei gegen die Federkraft der Federelemente.

Vorteilhaft ist, wenn die Kipphebel auf der der Anlagekontur abgewandten Seite im Bereich nahe der jeweiligen Kipphebelachse durch je ein Federelement beaufschlagt sind. Dabei wirkt vorteilhafterweise die Federkraft weitgehend senkrecht zu der durch den Auslösefinger eingeleiteten Auslösekraft. Dadurch, dass die Federkraft nahe der jeweiligen Kipphebelachse auf den Kipphebel wirkt und dass der Auslösenocken den Kipphebel fern der jeweiligen Kipphebelachse beaufschlagt, genügt aufgrund der Hebelwirkung des Kipphebels eine relativ geringe Kraft zum Auslenken des Kipphebels und damit zum Rückstellen des Blinkerschalthebels. Wird hingegen der Blinkerschalthebel von Hand in seine Ausgangslage rückgestellt, so ist hierfür eine relativ hohe Auslösekraft erforderlich. Die Auslösekraft ist deshalb relativ hoch, weil der jeweilige Halteabschnitt am Mitnehmer nahe der Schwenkachse des Kipphebels, also weitgehend ohne Hebelwirkung, gegen die Rückhalteerhebung wirkt.

Zur Verringerung des Verschleißes und zur Erhöhung der Lebensdauer weisen die Halteabschnitte vorteilhafterweise Rollen- oder Kugelelemente zur Anlage an die jeweilige Anlagekontur auf.

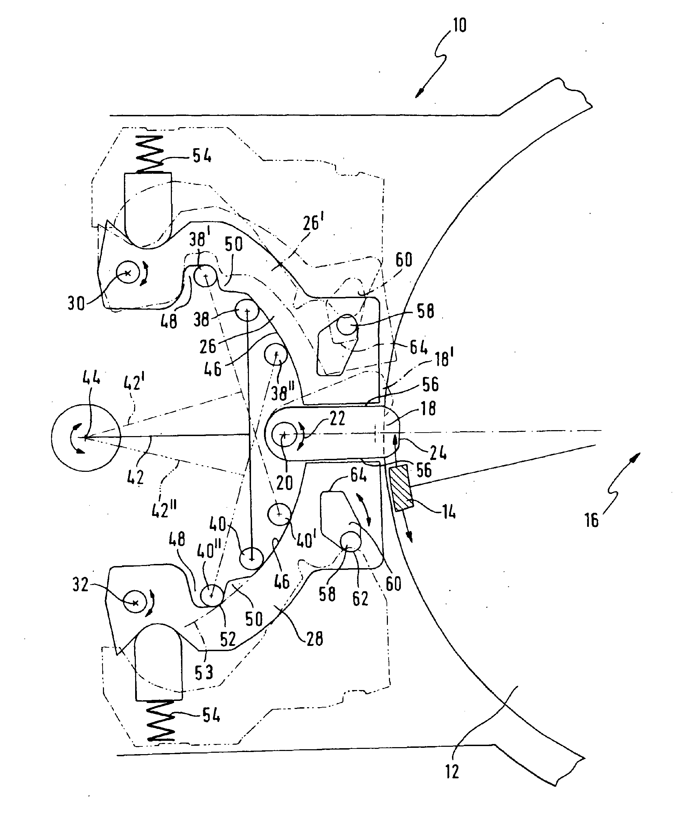

Weitere Einzelheiten und vorteilhafte Ausgestaltungen der Erfindung sind der folgenden Beschreibung zu entnehmen, in der die Erfindung anhand des in der Zeichnung dargestellten Ausführungsbeispiels näher beschrieben und erläutert ist.

In der Figur ist eine erfindungsgemäße Rückstelleinrichtung 10 dargestellt, die innerhalb eines nicht dargestellten Lenkstockschalters angeordnet ist. Zu erkennen ist ein ausschnittsweise dargestellter zylindrischer Durchbruch 12, der zur Aufnahme der Lenkspindel dient. Im Randbereich des Durchbruchs 12 ist ein lenkspindel- oder lenkradseitiger Nocken 14 dargestellt, der der Lenkbewegung der Lenkspindel beziehungsweise des Lenkrades um die Lenkachse 16 folgt.

Die Rückstelleinrichtung 10 umfasst einen Auslösefinger 18, der um eine Auslöseachse 20 in Richtung des Doppelpfeils 22 verschwenkbar ist. Der Auslösefinger 18 weist auf der der Lenkachse 16 zugewandten Seite einen Kontaktabschnitt 24 auf, der zur Auslenkung des Auslösefingers 18 von dem Nocken 14 beaufschlagt wird. In der Figur ist der Auslösefinger 18 in seiner Ausgangsstellung dargestellt. Eine Auslenkstellung des Auslösenockens 18' ist gestrichelt gezeigt. Der Auslösefinger 18 kann beispielsweise in radialer Richtung derart ausgebildet sein, dass er bei Nichtbetätigung des Blinkschalthebels nicht in den Bereich des Nockens 14 ragt.

Die Rückstelleinrichtung 10 umfasst ferner zwei Kipphebel 26, 28, die jeweils um eine Kipphebelachse 30, 32 auslenkbar sind. Die symmetrisch zueinander angeordneten Kipphebel 26, 28 weisen jeweils eine Anlagekontur 46 zur Anlage von Halteabschnitten 38, 40 eines Mitnehmers 42 auf. Der Mitnehmer 42 ist lediglich schematisch dargestellt und mit einem nicht dargestellten Blinkschalthebel eines Lenkstockschalters verbunden. Der Blinkschalthebel beziehungsweise der Mitnehmer 42 ist um eine Schwenkachse 44 bedingt verschwenkbar angeordnet. Der Mitnehmer 42, der insgesamt zwei Halteabschnitte 38, 40 aufweist, ist in der Figur in der Ausgangsstellung und in den beiden Schaltstellungen gezeigt, wobei in der ersten Schaltstellung die zugehörigen Bezugszeichen einen ' und in der zweiten Schaltstellung zwei ' ' aufweisen.

Wird also der Blinkschalthebel in die erste Schaltstellung betätigt, und der Mitnehmer 42 in die Stellung 42' verschwenkt, dann wandert der Halteabschnitt 38 in die Position 38'.

Die Kipphebel 26, 28 weisen auf den den jeweiligen Halteabschnitten 38, 40 zugewandten Seiten eine Anlagekontur 46 auf, die im Wesentlichen um die Schwenkachse 44 kreisbogenförmig ausgebildet ist. In den Bereichen, in denen die Halteabschnitte 38, 40 den Mitnehmer 42 in der jeweiligen Schaltstellung halten, sehen die Anlagekonturen 46 Rückhalteausbuchtungen 48 vor. Die Rückhalteausbuchtungen 48 werden durch sich nach radial zur Schwenkachse 44 erstreckende Rückhalteerhebungen 50 gebildet, wobei die Gründe 52 der Rückhalteausbuchtungen 48 auf der Verlängerung des die Anlagekonturen 46 bildenden Kreisbogens 53 liegen.

Beim Betätigen des Blinkschalterhebels von seiner Ausgangsstellung in die erste Schaltstellung.wird der Mitnehmer 42 in die Schaltposition 42' bewegt. Dabei wandert der Halteabschnitt 38 entlang der Anlagekontur 46 in die Position 38'. Aufgrund der Rückhalteerhebung 50 wird dabei der Kipphebel 26 in die gestrichelt angedeutete Position 26' bewegt. Erreicht der Halteabschnitt 38 die Endposition 38', so wird der Kipphebel 26 aus seiner Auslenkstellung 26' wieder in seine Ausgangsstellung 26 zurückbewegt. Hierfür sind Federelemente 54 vorgesehen, die den jeweiligen Kipphebel 26, 28 entgegen seiner jeweiligen möglichen Auslenkung in seine Grundstellung federbeaufschlagt. In der Schaltstellung 42' wird folglich der Halteabschnitt 38' in der Rückhalteausbuchtung 48 gehalten.
Beim Rückdrehen des Lenkrades beaufschlagt der Nocken 14 den Auslösefinger 18, so dass dieser in die Auslöseposition 18' bewegt wird. Über den Auslösefinger 18 wird der Kipphebel 26 in seine Auslöseposition 26' betätigt, wodurch der Halteabschnitt 38' frei gegeben wird. Über nicht dargestellte Federmittel wird der Blinkerschalthebel beziehungsweise der Mitnehmer 42 in seine Ausgangslage rückgestellt.

Wie der Figur entnommen werden kann, sind die beiden Kipphebelachsen 30, 32 auf der der Lenkstockachse 16 abgewandten Seite der Auslöseachse 20 angeordnet. Das heißt, sie sind in radialer Richtung von der Lenkstockachse 16 aus gesehen weiter von der Lenkstockachse 16 entfernt, als die Auslöseachse 20. Außerdem beaufschlagt der zwischen der Auslöseachse 20 und der mit dem Nocken 14 zusammenwirkende Kontaktabschnitt 24 liegende Bereich 56 den Kipphebel 26, 28 zur Auslenkung. Ferner liegen die Kipphebelachsen 30, 32 auf der dem Auslösefinger 18 abgewandten Seite des jeweiligen Kipphebels. Durch diese Geometrien wird eine sehr kompakte und dennoch funktionssichere Rückstelleinrichtung bereitgestellt.

Zur Begrenzung der Auslenkung der Kipphebel 26, 28 sind ortsfest angeordnete Anschlagzapfen 58 vorgesehen, die jeweils in eine Anschlagaussparung 60 eines Kipphebels 26, 28 eingreifen. In der Ausgangsstellung liegen die Anschlagzapfen 58 an den ihnen zugewandten Abschnitten 62 der Anschlagaussparungen 60 an. Bei einer maximalen Auslenkung der Kipphebel 26, 28 schlagen die Auslenkzapfen 58 an die Anschlagabschnitte 64 an.

Die Federelemente 54 beaufschlagen die Kipphebel 26, 28 auf der der Anlagenkontur 46 jeweils abgewandten Seite im Bereich nahe der jeweiligen Kipphebelachse. Aufgrund der der Federelemente 54 fern gelegenen Auslenkung der Kipphebel 26, 28 durch den Auslösefinger 18 ist eine relativ geringe Kraft zum Auslenken der Kipphebel 26, 28 erforderlich. Wird hingegen der Blinkschalthebel von Hand in seine Ausgangsposition rückgestellt, so müssen die Mitnehmer 38, 40 zur Auslenkung der Kipphebel 26, 28 aufgrund der nahe gelegenen Federelemente 54 eine relativ hohe Rückstellkraft überwinden.

Die Halteabschnitte 38, 40 können beispielsweise als Rollen- oder Kugelelemente ausgebildet sein. Dadurch wird ein Verschleiß in der Rückstelleinrichtung 10 verringert. In der Ausgangsstellung können die Kipphebel 28, 26 so angeordnet sein, dass ihre dem Auslösefinger 18 zugewandten Seiten unmittelbar am Rückstellfinger 24 anliegen. Aufgrund der Federbeaufschlagung durch die Federelemente 54 kann ein sicheres Anliegen gewährleistet werden. Durch das Anliegen werden Klappergeräusche unterbunden.

Sämtliche in der Beschreibung, den nachfolgenden Ansprüchen und der Zeichnung dargestellte Merkmale können sowohl einzeln als auch in beliebiger Kombination miteinander erfindungswesentlich sein.

## Patentansprüche

1. Rückstelleinrichtung (10) zur Rückstellung eines Blinkerschalthebels eines Lenkstockschalters von einer Schaltstellung in eine Ausgangstellung, mit einem schalthebelseitigen, um eine Schwenkachse (44) verschwenkbaren Halteabschnitte (38, 40) aufweisenden Mitnehmer (42), mit Kipphebeln (26, 28), die um ihre jeweilige Kipphebelachse (30, 32) verschwenkbar sind und je eine mit einem Halteabschnitte (38, 40) zusammenwirkende Anlagekontur (46) aufweisen, wobei jede Anlagekontur eine Rückhalteausbuchtung (52) für den ihr zugewandten Halteabschnitte (38, 40) aufweist, und mit einem um eine Auslöseachse (20) auslenkbaren Auslösefinger (18), wobei der Auslösefinger (18) von einem lenkradseitigen Nocken (14) betätigbar ist und zur Rückstellung des Schalthebels den jeweiligen Kipphebel (26, 28) soweit auslenkt, dass der in der Rückhalteausbuchtung (52) liegende Halteabschnitt (38, 40) freigegeben wird, **dadurch gekennzeichnet, dass** die Kipphebelachsen (30, 32) auf der dem Lenkstock (16) abgewandten Seite der Auslöseachse (20) angeordnet sind und dass der zwischen der Auslöseachse (20) und dem mit dem Nocken (14) zusammenwirkenden Kontaktabschnitt (24) liegende Bereich des Auslösefingers (18) den jeweiligen Kipphebel (26, 28) zur Auslenkung wenigstens abschnittsweise beaufschlagt.

2. Rückstelleinrichtung (10) nach Anspruch 1, **dadurch gekennzeichnet, dass** die Kipphebelachsen (30, 32) auf der dem Auslösefinger (18) abgewandten Seite des jeweiligen Kipphebels (26, 28) liegen.

3. Rückstelleinrichtung (10) nach Anspruch 1 oder 2, **dadurch gekennzeichnet, dass** die Anlagekonturen (46, 48) der Kipphebel (26, 28) entsprechend den Bewegungsbahnen der Halteabschnitte (38, 40) kreisbogenförmig (54) um die Schwenkachse (44) des Mitnehmers (42) ausgebildet sind, wobei der Auslösefinger (18) zwischen den einander zugewandten, der Lenkstockachse (16) nahe gelegenen Seiten der Kipphebel (26, 28) angeordnet sind.

4. Rückstelleinrichtung (10) nach Anspruch 1, 2 oder 3, **dadurch gekennzeichnet, dass** in der Ausgangsstellung die dem Auslösefinger (18) zugewandten Seiten (56) der Kipphebel (26, 28) minimal vom Auslösefinger (18) beabstandet sind oder gegen den Auslösefinger (18) wirken.

5. Rückstelleinrichtung (10) nach einem der vorhergehenden Ansprüche, **dadurch gekennzeichnet, dass** der Auslösefinger (18) unmittelbar mit den Kipphebeln (26, 28) und die Kipphebel (26, 28) unmittelbar mit dem jeweiligen Halteabschnitt (28, 40) zusammenwirken.

6. Rückstelleinrichtung (10) nach einem der vorhergehenden Ansprüche, **dadurch gekennzeichnet, dass** Anschlagmittel (58, 60) vorgesehen sind, die die Auslenkung der Kipphebel (26, 28) begrenzen.

7. Rückstelleinrichtung (10) nach Anspruch 6, **dadurch gekennzeichnet, dass** die Anschlagmittel (58, 60) je eine Anschlagaussparung (60) im jeweiligen Kipphebel (28, 30) und je einen ortsfest angeordneten Anschlagzapfen (58) umfassen, der in die jeweilige Anschlagaussparung (60) eingreift.

8. Rückstelleinrichtung (10) nach einem der vorhergehenden Ansprüche, **dadurch gekennzeichnet, dass** Rückstellmittel vorgesehen sind, die den Mitnehmer (42) und den Schalthebel beim Auslösen in die Ausgangsstellung rückstellen.

9. Rückstelleinrichtung (10) nach einem der vorhergehenden Ansprüche, **dadurch gekennzeichnet, dass** die Kipphebel (26, 28) durch Federelemente (54) federbeaufschlagt in einer nicht ausgelenkten Grundstellung gehalten werden.

10. Rückstelleinrichtung (10) nach Anspruch 9, **dadurch gekennzeichnet, dass** die Kipphebel (26, 28) auf der der Anlagekontur (46) abgewandten Seite im Bereich nahe der jeweiligen Kipphebelachse (30, 32) durch je ein Federelement (54) beaufschlagt sind.

11. Rückstelleinrichtung (10) nach einem der vorhergehenden Ansprüche, **dadurch gekennzeichnet, dass** die Halteabschnitte (38, 40) Rollen- oder Kugelelemente zur Anlage an die Anlagekontur aufweisen.
